# EUROPÄISCHE PATENTSCHRIFT

(11) **EP 0 360 923 B1**
(45) Veröffentlichungstag und Bekanntmachung des Hinweises auf die Patenterteilung: **13.01.1993**
(21) Anmeldenummer: 88116253.1
(22) Anmeldetag: 30.09.1988
(51) Int. Cl.: G01L 5/16

(54) **Messplattform**
Measuring platform
Plateau de mesure

(43) Veröffentlichungstag der Anmeldung: 04.04.1990
(73) Patentinhaber: Kistler Instrumente AG, CH-8408 Winterthur (CH)
(72) Erfinder: Gautschi, Gustav, CH-8053 Zürich (CH); Kohler, Denis, CH-8413 Neftenbach (CH); Wolfer, Peter, CH-8450 Kleinandelfingen (CH)
(74) Vertreter: Schmidt, Horst, Dr.

(56) Entgegenhaltungen:
- AT-B- 383 678
- CH-A- 502 590
- GB-A- 949 522
- US-A- 2 411 251
- US-A- 4 398 429

## Beschreibung

Die Erfindung betrifft eine Messplattform, bestehend aus durch wenigstens einen zwischenangeordneten Kraftaufnehmer miteinander verbundenen Bauteilen, insbesondere einer Deckplatte und einem Basisteil.

Solche Messplattformen, wie sie beispielsweise in der Biomechanik Verwendung finden, dienen zur Messung von Kräften in einer oder mehreren Richtungen, ggf. auch von Drehmomenten. Beispielsweise werden damit die Fusskräfte beim Gehen einer Person gemessen, wobei die Vertikalkomponente, die Horizontalkomponente in Gehrichtung und die seitliche Kraftkomponente analysiert werden. Die Deckplatte verläuft meist ebenerdig, während das Basisteil als Basisplatte oder Rahmen ausgebildet sein kann und in den Boden, beispielsweise in eine Vertiefung eines Laufsteges, fest eingebaut ist. Das Basisteil kann jedoch auch lediglich aus z.B. vier Füssen bestehen.

Eine voll ausgebildete Messplattform erlaubt die Messung der drei Komponenten Fₓ, F_{y}, F_{z} einer auf die Plattform einwirkenden Kraft F und die Messung der drei Komponenten Mₓ, M_{y}, M_{z} des auf den Ursprung bezogenen resultierenden Momentenvektors M. Meistens umfasst die Messplattform vier in einem Rechteck angeordnete Kraftaufnehmer, wobei jeder Aufnehmer vorzugsweise die drei Komponenten Fx, Fy, Fz einer auf ihn aus beliebiger Richtung wirkenden Kraft messen kann. Dabei verlaufen die x- und y-Koordinaten parallel zu den Seiten des durch die vier Kraftaufnehmer gebildeten Rechtecks, die z-Koordinate steht senkrecht dazu. Der Koordinantenursprung wird im allgemeinen in die Mittelebene der Aufnehmer gelegt. Die z-Achse des Koordinatensystems wird so gelegt, dass ihr Durchstosspunkt mit der Deckplattenoberläche in der Mitte des durch die vier Kraftaufnehmer gebildeten Rechteckes liegt. Die von den vier Kraftmesszellen gebildeten elektrischen Signale werden im allgemeinen partiell addiert (Parallelschaltung) und in einem Rechenwerk derart ausgewertet, dass die gewünschten Kraftkomponenten, aber auch die Komponenten aₓ und a_{y} des Angriffspunktes der Kraft sowie das Drehmoment T um die z-Achse bestimmt werden können. Die für die Messung und Berechnung der Kräfte, Kraftangriffspunkte und Drehmomente anzuwendenden Formeln sind bekannt, vergl. z.B. J. Tich 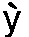 und G. Gautschi, Piezoelektrische Messtechnik, Springer Verlag, S. 175-181. Hinzuweisen ist ferner auf die CH-PS 502 590, die darüber hinaus ein Beispiel für die anzuwendenden Schaltungen beeinhaltet.

Die bekannten Messplattformen umfassen im allgemeinen vier Kraftaufnehmer auf piezoelektrischer Basis. Es sind aber auch Plattformen mit mehr oder weniger Kraftaufnehmern möglich. So ist beispielsweise bei der Messung von Zerspanungsvorgängen eine Plattform mit drei Kraftaufnehmern im Gebrauch. Anstelle der piezoelektrischen Aufnehmer sind auch auf einem anderen Prinzip basierende Kraftaufnehmer, z.B. resistive, kapazitive etc. möglich.

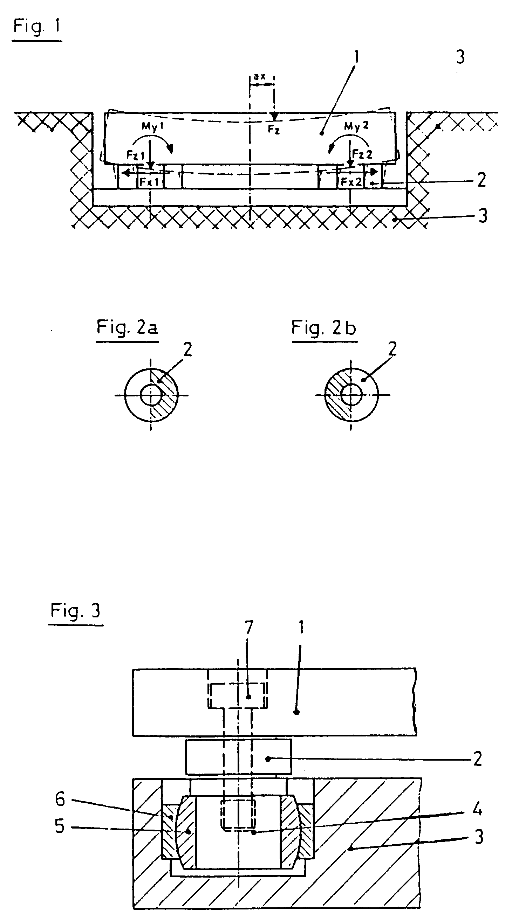

Wenn auf eine konventionelle Plattform eine Druckkraft wirkt, so biegt sich die Plattform nach unten durch. Die Druckkraft braucht keine Einzelkraft zu sein; sie kann ebenso die Resultierende mehrerer Einzelkräfte darstellen. Überdies wird es sich im allgemeinen nicht um eine reine Druckkraft handeln, sondern um die senkrechte, in z-Richtung wirkende Komponente einer zu der Plattform unter einem Raumwinkel stehenden Kraft. Die Durchbiegung der Messplattform hat messtechnische Konsequenzen, wie sie in Figur 1 dargestellt ist. In der genannten Figur bedeuten das Bezugzeichen 1 die Deckplatte der Messplattform, 2 die Kraftaufnehmer (nur zwei sind dargestellt), 3 die Grundplatte und 4 den Untergrund. Eine senkrecht zur Plattform wirkende Kraft F_{z} biegt die Plattform nach unten durch. Das Mass der Durchbiegung ist abhängig von der Steifigkeit der Deckplatte, welche wiederum von deren Abmessungen und dem verwendeten Material abhängt. In jedem Fall verursacht die Druckkraft F_{z} in jedem der Aufnehmer Biegemomente und Schubkräfte, die in Fig. 1 mit My₁, My₂, Fx₁ und Fx₂ bezeichnet sind, wobei sich die Indizes auf die einzelnen Kraftaufnehmer beziehen. Die Belastung der Aufnehmer wird infolge der Durchbiegung ungleichmässig, wie dies in Fig. 2 schematisch dargestellt ist, was deren Empfindlichkeit, Linearität und Stabilität beeinträchtigt.

Wesentlich sind auch die ungünstigen messtechnischen Auswirkungen der Drehmomente My₁ und My₂ sowie der Schubkräfte Fx₁ und Fx₂. Zahlreiche Anwendungen solcher Messplattformen, z.B. für biomechanische Untersuchungen, verlangen die möglichst genaue Angabe der Koordinaten des Kraftangriffspunktes aₓ und a_{y}, gemessen auf der Oberfläche der Deckplatte 1 (Fig. 1). Rechnerisch ergibt sich, dass die Messfehler Δ a_{x,y} für aₓ und a_{y} proportional zu der Differenz der Drehmomente Δ M_{x,y} um die entsprechende Achse (x- oder y-Achse) ist. Bei einem beliebigen, exzentrischen Kraftangriffspunkt von F_{z} mit den Koordinaten a_{x,y}, kann der Messfehler Δ a_{x,y} erheblich sein, so dass er nicht vernachlässigt werden kann.

Die in Fig. 1 dargestellten Schubkräfte Fx₁ und Fx₂ verursachen im allgemeinen ein "Übersprechen" auf die Axialkraft Fz, was auf die Unvollkommenheit der Aufnehmer zurückzuführen ist. Nimmt man für die Aufnehmer ein Übersprechen der Schub- auf die Axialkraft von beispielsweise 2 % an, so wird im Ausgangssignal jedes Aufnehmers 2 % von Fx₁ und Fx₂ zusätzlich zu Fz₁ bzw. Fz₂ mitgemessen. Der so entstehende Messfehler kann beträchtlich sein, abgesehen davon, das Fx₁ und Fx₂ keine lineare Funktion von F_{z} sind. Auch kann ein Übersprechen von Fx₁ und Fx₂ auf die Kraftkomponenten Fy₁ und Fy₂ stattfinden, die dann entsprechend falsch gemessen werden.

Bekannt (US-A-4 398 429) ist ferner eine Messplattform für biomechanische Messungen, bei der ein Kraftaufnehmer in Gestalt eines elastischen Dehnringes auf Dehnungsmessstreifen-Basis einerends elastisch mit einer Deckplatte und anderenends fest mit einer Basisplatte verbunden ist. Die elastische Verbindung zwischen Dehnring und Deckplatte kann eine messwertverfälschende Übertragung von Einspannmomenten auf den Aufnehmer nur verhindern, wenn die Deckplatte im Verhältnis zum Dehnring so biegesteif ist, dass unter Belastung praktisch keine Durchbiegung eintritt. Darüber hinaus ist der Aufbau der bekannten Anordnung kompliziert und ungeeignet, um Messplattformen mit geringer Bauhöhe zu schaffen.

Der Erfindung liegt daher die Aufgabe zugrunde, eine Messplattform der eingangs erwähnten Gattung zu schaffen, bei der das Auftreten von Messfehlern als Folge des Durchbiegens der Deckplatte ganz oder weitestgehend vermieden wird.

Diese Aufgabe wird durch die Merkmale im kennzeichnenden Teil des Patentanspruches 1 gelöst. Da als Kraftaufnehmer ein piezoelektrischer Wandler mit von Natur her hoher Steifigkeit vorgesehen ist, und dieser darüber hinaus direkt anliegend an entweder der Deckplatte oder dem Basisteil dagegen verspannt ist, wird eine sehr starre Verbindung zwischen Kraftaufnehmer und dem betreffenden einen Bauteil geschaffen. Anders als bei der bekannten Messplattform ist ausserdem die Verbindung zwischen dem Kraftaufnehmer und dem anderen Bauteil nicht elastisch, sondern erfolgt über eine Kugelgelenkanordnung und damit praktisch einspannmomentenfrei, selbst wenn sich die Deckplatte unter Belastung durchbiegen sollte. Eine weitere Verbesserung hinsichtlich des Fernhaltens von Einspannmomenten auf den Kraftaufnehmer wird mit einer Weiterbildung der Erfindung gemäss dem Anspruch 4 erhalten. Bezüglich anderer Weiterbildungen der Erfindung wird auf die verbleibenden Ansprüche verwiesen.

Durch die Erfindung ist somit eine Messplattform geschaffen, bei der Biegemomente und Schubkräfte, welche infolge der Durchbiegung der Deckplatte auftreten können, zuverlässig abgefangen werden und damit keine der besagten Messfehler verursachen. So werden z.B. die erwähnten Ausdrücke Δ a_{xy}, M_{xy} gleich null, weil die Momente null sind.

Die Erfindung wird nachfolgend anhand der Zeichnung und Ausführungsformen näher beschrieben:
- Fig. 1: zeigt eine sich unter Belastung durchbiegende Messplattform bekannter Ausführung.
- Fig. 2a, b: zeigen schematisch die Belastung zweier gegenüberliegender Kraftaufnehmer bei der Messplattform nach Fig. 1.
- Fig. 3: zeigt einen Ausschnitt aus einer erfindungsgemässen Messplattform, in welcher die einspannmomentenfreie Verbindung des Kraftaufnehmers mit der Basisplatte über eine Kugelgelenkanordnung erfolgt.
- Fig. 4: zeigt einen Ausschnitt aus einer erfindungsgemässen Messplattform, in welcher die einspannmomentenfreie Verbindung des Kraftaufnehmers mit der Basisplatte über ein durch eine modifizierte auf der Basisplatte abgestützte Kugelgelenkanordnung erfolgt, wobei sowohl der Aufnehmer wie das Kugelgelenk durch eine flexible Spannschraube verspannt sind.
- Fig. 5: zeigt einen Ausschnitt aus einer Messplattform ähnlich Fig. 4, wobei jedoch die Basisplatte durch Füsse ersetzt ist.

In der Zeichnung tragen gleiche oder ähnliche Teile gleiche Bezugszeichen.

Die Fig. 1 sowie 2a und 2b, die den Stand der Technik wiedergeben, wurden bereits eingangs beschrieben.

Fig. 3 zeigt eine bevorzugte Ausführungsform der Erfindung, bei der die von Einspannmomenten im wesentlichen freie Verbindung des Kraftaufnehmers 2 (im vorliegenden Fall aus ein oder mehreren piezoelektrischen Quarzscheiben bestehend) mit der Basisplatte 3 durch eine mechanische Gelenkanordnung in Gestalt eines Kugelgelenkes 5, 6 geschaffen ist. Der Aufnehmer 2 kann mit einer Stirnseite direkt an der Deckplatte 1 anliegen, während von der gegenüberliegenden Stirnseite ein Träger 4 für den Kopf 5 des Kugelgelenkes absteht. Eine Spannschraube 7 stützt sich mit ihrem Kopf in der Deckplatte 1 der Messplattform ab und erstreckt sich durch den Aufnehmer 2 zur Verschraubung mit dem Träger 4 des Kugelgelenkes. Mittels der Spannschraube 7 kann der Aufnehmer 2 unter eine Vorspannung gesetzt werden. Die Pfanne 6 des Kugelgelenkes ist in der Basisplatte 3 in geeigneter Weise gehalten. Der Krümmungsmittelpunkt des Kugelgelenkes 5, 6 liegt so, dass auf den Drehpunkt des Kugelgelenkes bei einer Durchbiegung der Deckplatte 1 im wesentlichen keine Kräfte einwirken. Diese könnten anderenfalls sich auf die Basisplatte 3 übertragen und als Reaktionskräfte Schubkräfte im Aufnehmer 2 bewirken und dadurch die Messung verfälschen.

Das Kugelgelenk 5, 6 sollte möglichst reibungsfrei ausgebildet sein, um das Auftreten von reibkraftbedingten Biegemomenten bei einer Durchbiegung der Deckplatte 1 zu verhindern. Vorzugsweise bestehen daher wenigstens die aufeinandergleitenden Bereiche des Gelenkkopfes 5 und der Gelenkpfanne 6 aus einem geeigneten Kunststoffmaterial, wie beispielsweise Polytetrafluoräthylen (PTFE) oder aus einer Kombination von Kunststoff und Metall. Es versteht sich, dass die Erfindung nicht auf die gezeigte Ausbildung der Gelenkanordnung beschränkt ist, sondern auch andere geeignete Gelenkanordnungen, wie beispielsweise auf Basis von Pendelkugellagern, Radialgelenklagern oder Axialgelenklagern verwendet werden können. Die Kraftaufnehmer 2 sind erfindungsgemäss im wesentlichen starr mit der Deckplatte 1 verbunden, um die auf sie wirkenden und zu messenden Kräfte (einschließlich der Schubkräfte) aufnehmen zu können. Die Verbindung der Kraftaufnehmer 2 mit der Basisplatte 3 ist dagegen im wesentlichen frei drehbar, damit die Biegemomente und Schubkräfte aufgefangen werden können, welche bei der Belastung der Deckplatte 1 und deren Durchbiegung auftreten. Die beiden Funktionen "starre Verbindung mit der Deckplatte" und "einspannmomentenfreie Verbindung mit der Basisplatte" werden einerseits durch das Gelenk 5, 6 und andererseits dadurch bewirkt, daß die Aufnehmer 2 fest gegen die Deckplatte 1 verspannt oder verpresst sind. Es versteht sich, dass auch eine Umkehrung der gezeigten Verhältnisse vorgenommen werden kann, indem eine starre Verbindung der Kraftaufnehmer 2 mit der Basisplatte 3 und eine im wesentlichen einspannmomentenfreie Verbindung mit der Deckplatte 1 vorgesehen wird.

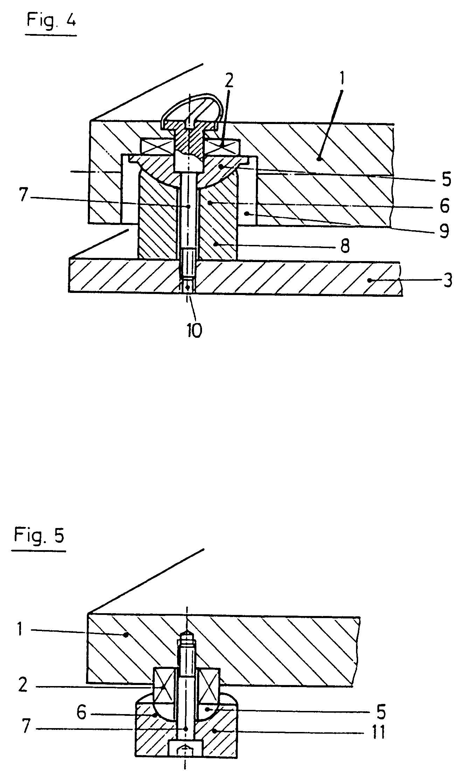

Fig. 4 zeigt eine Messplattform gemäss einer anderen Ausführungsform der Erfindung, bei der die von Einspannmomenten im wesentlichen freie Verbindung ein durch einen Stützzylinder 8 auf der Basisplatte 3 abgestütztes Kugelgelenk umfaßt. Eine biegeelastische Spannschraube 7 erstreckt sich von der Deckplatte 1 durch den Kraftaufnehmer 2, das Kugelgelenk 5, 6 und den Stützzylinder 8 in eine Gewindebohrung in der Basisplatte 3, so dass die Teile mittels der flexiblen Spannschraube 7 gegeneinander verspannt werden können. Das Kugelgelenk 5, 6 und die biegeelastische Spannschraube 7 bewirken eine im wesentlichen einspannmomentenfreie Abstützung des Kraftaufnehmers 2. Fig. 4 unterscheidet sich von der Ausführungsform nach Fig. 3 im wesentlichen in der vereinfachten Konstruktion, indem die Bewegungsfläche des Kugelgelenkes 5, 6 im wesentlichen parallel zur Deckplatte 1 liegt, während sie sich bei der Ausführungsform nach Fig. 3 im wesentlichen senkrecht dazu erstreckt. Der Kraftaufnehmer 2 liegt direkt auf dem Gelenkkopf 5 des Kugelgelenkes, während dessen Gelenkpfanne 6 im Stützzylinder 8, der die Deckplatte 1 mit dem daran anliegenden Kraftaufnehmer 2 von der Basisplatte 3 distanziert, ausgebildet sein kann. Die Spannschraube 7, welche sich durch die Deckplatte 1, den Aufnehmer 2, den Gelenkkopf 5, die Gelenkpfanne 6, den Stützzylinder 8 und die Basisplatte 3 in genannter Reihenfolge erstreckt und diese Teile gegeneinander verspannt bzw. miteinander verbindet, ist in geeigneter Weise biegeelastisch ausgebildet, so daß sie einer Durchbiegung der Deckplatte 1 elastisch nachgeben kann. Die Bohrung im Stützzylinder 8 ist so dimensioniert, daß sie die Spannschraube 7 mit radialem Spiel aufnehmen kann.

Fig. 5 zeigt eine Messplattform ähnlich Fig. 4, bei der jedoch die Basisplatte 3 durch Füsse 11 ersetzt ist. Im allgemeinen ist jeder Kraftaufnehmer 2 mit einem derartigen Fuss 11 versehen, der direkt auf den Untergrund gestellt werden kann. Für gewisse Anwendungen in der Biomechanik sind solche vereinfachten Messplattformen erwünscht. Dargestellt ist in Fig. 5 auch die Möglichkeit, die zentrale Spannschraube 7, die biegeelastisch ist und genügendes radiales Spiel in den Bohrungen des Aufnehmers 2 sowie der Kugelgelenkanordnung 5, 6 haben soll, von unten, d.h. vom Fuss 11 her, einzuführen. Die aufnehmende Gewindebohrung befindet sich dann in der Deckplatte 1.

Mit der vorliegenden Erfindung, durch die gänzlich oder weitgehend die eingangs erwähnten Messfehler verhindert werden können, die bei der Durchbiegung der Deckplatte einer Messplattform unter Belastung entstehen, werden der Plattform-Messtechnik neue Anwendungsgebiete erschlossen, wo die bei bekannten Messplattformen auftretenden Messfehler für zahlreiche Anwendungen speziell in der Biomechanik nicht mehr tolerierbar waren.

## Patentansprüche

1. Messplattform, bestehend aus durch wenigstens einen zwischenangeordneten Kraftaufnehmer (2) miteinander verbundenen Bauteilen, (1,3) insbesondere in Gestalt einer Deckplatte (1) und eines Basisteiles (3), wobei der Kraftaufnehmer (2) mit einem der Bauteile (1,3) im wesentlichen einspannmomentenfrei und mit dem anderen Bauteil fest verbunden ist, dadurch gekennzeichnet, dass
a) die im wesentlichen einspannmomentenfreie Verbindung mit dem betreffenden einen Bauteil als Kugelgelenkanordnung (5,6) ausgebildet ist, und
b) der Kraftaufnehmer (2) ein mit einer Stirnseite am betreffenden anderen Bauteil anliegender, dagegen verspannter piezoelektrischer Wandler ist, so dass zwischen dem Kraftaufnehmer (2) und dem anderen Bauteil eine im wesentlichen starre Verbindung geschaffen ist.

2. Messplattform nach Anspruch 1, dadurch gekennzeichnet, dass der Krümmungsmittelpunkt der Kugelgelenkanordnung (5,6) in Bezug auf deren Drehpunkt im wesentlichen kraftwirkungsfrei unter einer Durchbiegung des betreffenden einen Bauteiles angeordnet ist.

3. Messplattform nach Anspruch 1 oder 2, dadurch gekennzeichnet, dass die Kugelgelenkanordnung (5,6) ein Pendelkugellager, Radialgelenklager oder Axialgelenklager umfasst.

4. Messplattform nach einem der vorhergehenden Ansprüche, dadurch gekennzeichnet, dass die Kugelgelenkanordnung (5,6) einen sich auf dem betreffenden einen Bauteil abstützenden Stützzylinder (8) umfasst, und dass eine biegeelastische Spannschraube (7) zum gegenseitigen Verspannen des Kraftaufnehmers (2), der Kugelgelenkanordnung (5,6) und des Stützzylinders (8) vorgesehen ist.

## Claims

1. A measuring platform comprising components, in particular a cover plate (1) and a base blate (3), connected with each other by means of at least one interposed force transducer (2), said force transducer (2) being connected with one of said components essentially free of end moments and with the other component in a solid manner, characterized in that
a) the said connection essentially free of end moments of the concerned one component is formed as a ball joint arrangement (5,6), and
b) the said force transducer (2) is a piezoeletric sensor abutting with one of the faces thereof against the concerned other component and clamped therewith, whereby an essentially rigid connection is provided between said force transducer (2) and said other component.

2. The measuring platform according to claim 1, characterized in that the centre of curvature of the ball joint arrangement (5,6) relative to the point of rotation thereof is disposed in a manner to be essentially free of force effects under bending of the concerned one component.

3. The measuring platform according to claim 1 or 2, characterized in that the ball joint arrangement (5,6) comprises a self-aligning ball bearing, and radial or axial ball and socket joints.

4. The measuring platform according to one of the preceding claims, characterized in that the ball joint arrangement (5,6) comprises a supporting cylinder (8) abutting against the concerned one component, and that an flexurally elastical clamp screw (7) for clamping together the force transducer (2), the ball joint arrangement (5,6) and the supporting cylinder (8) is provided.

## Revendications

1. Plate-forme de mesure constituée d'éléments (1, 3) assemblés l'un à l'autre par au moins un capteur de mesure (2) disposé entre eux, en particulier sous la forme d'une plaque supérieure (1) et d'une pièce de base (3) dans laquelle le capteur de mesure (2) est assemblé à l'un des éléments (1, 3) essentiellement sans moment de serrage et est assemblé solidement à l'autre élément, caractérisée en ce que
a) l'assemblage essentiellement sans moment de serrage avec un des éléments est constitué d'un dispositif à rotules (5, 6), et
b) le capteur de force (2) est un convertisseur piézoélectrique appuyant par une face frontale sur l'autre élément concerné et serré contre celui-ci si bien qu'un assemblage essentiellement rigide est réalisé entre le capteur de force (2) et l'autre élément.

2. Plate-forme de mesure selon la revendication 1, caractérisée en ce que le centre de courbure du dispositif à rotules (5, 6) est disposé sous une flèche de l'élément concerné essentiellement sans exercer de force par rapport à son point de rotation.

3. Plate-forme de mesure selon la revendication 1 ou 2, caractérisé en ce que le dispositif à rotules (5, 6) comprend un palier à billes pendulaire, un palier à articulation radiale ou un palier à articulation axiale.

4. Plate-forme de mesure selon l'une des revendications précédentes, caractérisée en ce que le dispositif à rotules (5, 6) comprend un cylindre d'appui (8) appuyant sur l'un des éléments concernés et qu'une vis de serrage (7) à élasticité de flexion est prévue pour serrer l'un contre l'autre le capteur de force (2), le dispositif à rotules (5, 6) et le cylindre d'appui (8).
